# EUROPÄISCHE PATENTANMELDUNG

(11) **EP 1 469 303 A1**
(43) Veröffentlichungstag der Anmeldung: **20.10.2004**
(21) Anmeldenummer: 04003734.3
(22) Anmeldetag: 19.02.2004
(51) Int. Cl.: G01N 23/201

(54) **In Richtung der optischen Achse verschiebbarer Primärstrahlfänger für Röntgen- oder Neutronenstrahlen**

(30) Priorität: 17.04.2003 DE 10317677
(71) Anmelder: Bruker AXS GmbH, 76187 Karlsruhe (DE)
(72) Erfinder: Lange, Joachim, 76767 Hagenbach (DE); Schipper, Rolf-Dieter, 76189 Karlsruhe (DE)
(74) Vertreter: KOHLER SCHMID + PARTNER

(57) **Zusammenfassung**

Ein röntgen- bzw. Neutronen-optisches System mit einer Röntgen- bzw. Neutronen-Quelle (1), von der ein Primärstrahl (2) auf eine zu untersuchende Probe (4) geführt wird, mit einem Detektor (6) zum Empfang von an der Probe gebeugter oder gestreuter Strahlung, wobei die Quelle (1), die Probe und der Detektor im Wesentlichen auf einer Linie (=z-Achse) angeordnet sind, und wobei zwischen der Probe und dem Detektor ein Strahlfänger (5) vorgesehen ist, dessen Querschnittsform senkrecht zur z-Richtung an den Querschnitt des Primärstrahls angepasst ist, ist dadurch gekennzeichnet, dass der Strahlfänger zur optimalen Einstellung des Verhältnisses der auf den Detektor gelangenden Nutzstrahlung zur Störstrahlung entlang der z-Richtung verschiebbar angeordnet ist. Dadurch kann der Strahlfänger an zeitlich veränderliche Eigenschaften der Strahlantik leicht angepasst werden.

## Beschreibung

Die Erfindung betrifft ein röntgen- bzw. Neutronen-optisches System mit einer Röntgen- bzw. Neutronen-Quelle, von der entsprechende Strahlung als Primärstrahl auf eine zu untersuchende Probe geführt wird, mit einem Röntgen- bzw. Neutronen-Detektor zum Empfang von an der Probe gebeugter oder gestreuter Strahlung, wobei die Quelle, die Probe und der Detektor im Wesentlichen auf einer Linie (=z-Achse) angeordnet sind, und wobei zwischen der Probe und dem Detektor ein Strahlfänger vorgesehen ist, dessen Querschnittsform senkrecht zur z-Richtung an den Querschnitt des Primärstrahls angepasst ist.

Ein gattungsgemäßes röntgenoptisches System ist beispielsweise durch die Firmendruckschrift "HR-PHK for NanoSTAR", Instruction Handbook, Anton Paar GmbH, Kärntner Str. 322, A-8054 Graz (Österreich), 1998, insbesondere Seite 16, bekannt geworden.

Zur Untersuchung der Eigenschaften, etwa Materialeigenschaften, von Proben werden röntgen- und neutronenoptische Verfahren eingesetzt. Ein gebündelter Röntgen- oder Neutronenstrahl wird dazu auf die Probe gelenkt, wo er mit der Probe auf vielfältige Weise wechselwirkt, insbesondere durch Streuung und Beugung. Die Röntgen- oder Neutronenstrahlung nach dem Wechselwirkungsprozess wird durch einen Detektor registriert und anschließend ausgewertet, um auf Eigenschaften der Probe rückzuschließen.

Bei vielen dieser Verfahren unterliegt nur ein kleiner Teil der Röntgen- oder Neutronenstrahlung einer Richtungsablenkung. Der weitaus größte Teil der Strahlung passiert die Probe unabgelenkt. Der unabgelenkte Teil der Strahlung wird Primärstrahl genannt, sowohl vor als auch hinter der Probe. In der Regel müssen Detektoren zur Registrierung von gebeugter oder gestreuter Strahlung vor der direkten Einwirkung des Primärstrahls geschützt werden, um irreversible Beschädigungen am Detektor zu vermeiden. Dazu werden sogenannte Strahlfänger eingesetzt, die den Detektor teilweise abschatten, um einen Einfall von Primärstrahlung zu verhindern. Ein Strahlfänger kann auch störende divergente parasitäre Strahlung (etwa durch Fresnel-Beugung an Blendenrändern) abschatten.

Ein Strahlfänger des bekannten Standes der Technik ist in der Firmendruckschrift der Anton Paar GmbH, aaO, beschrieben. Der Strahlfänger besteht aus einem Goldplättchen, welches durch Nylonfäden in einem Stahlring fixiert ist. Die Position des Goldplättchens in der Ringebene (xy-Ebene) kann über zwei Mikrometerschrauben justiert werden. Der Stahlring wird am Detektor angeflanscht.

Das Profil des Primärstrahls, insbesondere sein Durchmesser, ist von verschiedenen Einflussfaktoren abhängig. Zum einen weisen die verwendeten Komponenten wie Blenden oder die Strahloptiken Fertigungstoleranzen auf. Zum anderen gibt es auch zeitlich veränderliche Eigenschaften der Strahloptik, etwa Temperatureinflüsse, Alterungserscheinungen, oder veränderliche experimentelle Aufbauten.

Um den Detektor unter diesen Umständen ausreichend zuverlässig vor dem Primärstrahl schützen zu können, muss ein relativ großer Strahlfänger eingesetzt werden, der auch einen Teil der im Bereich der Kleinwinkelstreuung (ca. 0,1 bis 5° Strahlablenkung) anfallenden Strahlung abschattet, wodurch Informationen über die Probe verloren gehen kann. Alternativ ist es möglich, den Strahlfänger iterativ einer gegebenen Strahloptik anzupassen; in diesem Falle können aber veränderliche Eigenschaften Strahloptiken nicht korrigiert werden.

Aufgabe der vorliegenden Erfindung ist es demgegenüber, einen Strahlfänger bereitzustellen, der den Detektor vor der Einwirkung des Primärstrahls und divergenter parasitärer Störstrahlung schützt, und gleichzeitig einen möglichst großen, wählbaren Anteil von gebeugter oder gestreuter Strahlung zum Detektor gelangen lässt, wobei der Strahlfänger zeitlich veränderlichen Eigenschaften der Strahloptik leicht anpassbar ist.

Diese Aufgabe wird auf überraschend einfache, aber wirkungsvolle Weise bei einem Röntgen- oder neutronenoptischen System der eingangs vorgestellten Art dadurch gelöst, dass der Strahlfänger zur optimalen Einstellung des Verhältnisses der auf den Detektor gelangenden Nutzstrahlung zur Störstrahlung entlang der z-Richtung verschiebbar angeordnet ist.

Nach dem Durchdringen der Probe ist der Primärstrahl in aller Regel divergent, d.h. der Strahldurchmesser nimmt mit dem Ausbreitungsweg entlang der Strahlachse (z-Achse) zu. Durch die erfindungsgemäße Verschiebbarkeit des Strahlfängers in z-Richtung, d.h. auf den Detektor zu bzw. vom Detektor weg kann der Strahlfänger an genau die Position im Strahlengang verfahren werden, an der der feste Durchmesser des Strahlfängers und der örtlich veränderliche Durchmesser des Primärstrahles (und der parasitärer Streustrahlung) übereinstimmen. Durch diesen Aufbau werden der Primärstrahl und parasitäre Streustrahlung vom Detektor ferngehalten, gleichzeitig können strahlnahe Beugungserscheinungen vom Detektor weitestgehend erfasst werden.

Anders ausgedrückt kann erfindungsgemäß der Durchmesser des Schattenwurfes des Strahlfängers in der Detektorebene (senkrecht zur Strahlachse, z-Richtung) beliebig eingestellt werden. Wenn der Schattenwurf des Strahlfängers genau den Strahlfleck des Primärstrahls und etwaiger parasitärer Strahlung in der Detektorebene abdeckt, ist der Strahlfänger optimal positioniert. Der Durchmesser des Schattenwurfs kann auf die Gegebenheiten des Experiments, insbesondere auf die genauen Abmessungen der Komponenten, abgestimmt werden. Auch ist eine Veränderung des Schattenwurfs, um sich zeitlichen Änderungen der Eigenschaften der Strahloptik anzupassen, leicht möglich.

Bei einer besonders bevorzugten Ausführungsform des erfindungsgemäßen Systems ist das System zur Messung von Kleinwinkel-Streuung, insbesondere zwischen 0,1° und 5° eingerichtet. In diesem Fall ist eine genaue Ausblendung der Störstrahlung von Primärstrahl und divergenter parasitärer Strahlung besonders vorteilhaft, um den größtmöglichen Informationsgehalt der detektierten Nutzstrahlung zu gewährleisten, denn die Nutzstrahlung bei Kleinwinkelstreuexperimenten ist vornehmlich strahlnah gebeugte Strahlung.

Eine bevorzugte Ausführungsform sieht vor, dass der Strahlfänger in einer xy-Ebene senkrecht zur z-Richtung justierbar ist. Dadurch kann nicht nur der Durchmesser, sondern auch die Position des Schattenwurfs des Strahlfängers in der Detektorebene eingestellt werden.

Vorteilhaft ist weiterhin eine Ausführungsform, bei der der Strahlfänger eine runde, vorzugsweise eine kreisförmige Querschnittsform aufweist. In der Regel sind die Querschnitte von Primärstrahl und parasitärer Streustrahlung ebenfalls rund ausgeformt, so dass in diesem Fall der Strahlfänger in seiner Querschnittsform dem Regelfall angepasst ist.

Bevorzugt ist weiterhin eine Ausführungsform eines erfindungsgemäßen Systems, bei der der Strahlfänger eine Kegelstumpf-ähnliche Form aufweist. Die Kegelachse ist dabei an der Strahlachse ausgerichtet, und die breitere Kegelstumpfseite ist der Quelle bzw. der Probe zugewandt. In diesem Fall definiert die breite Kegelstumpfseite mit ihrem Rand eine scharfe Grenze des abgeschatteten Bereichs im Strahlengang. Wechselwirkungen von Strahlung mit der Kegelmantelfläche sind weitgehend ausgeschlossen.

Eine weitere vorteilhafte Ausführungsform des erfindungsgemäßen Systems sieht vor, dass der Strahlfänger aus einem für die Strahlung stark absorbierenden Material aufgebaut ist, insbesondere aus Au und/oder Sb und/oder Pb und/oder W und/oder Bi. In diesem Falle kann der Strahlfänger relativ dünn und leicht ausgebildet werden, was dessen Justage erleichtert.

Vorteilhaft ist weiterhin eine Ausführungsform, bei der der Strahlfänger motorisch in z-Richtung verfahrbar ist. Dadurch kann die Justage in z-Richtung maschinell mit großer Präzision durchgeführt werden.

Besonders bevorzugt ist eine Weiterbildung dieser Ausführungsform, bei der das System nach vorgebbaren Kriterien automatisch justierbar ist. Insbesondere kann die automatische Justage nach jeder Veränderung des experimentellen Aufbaus oder vor jeder Messung durchgeführt werden. Es werden dann unter optimalen Bedingungen die Messungen durchgeführt. Typische Kriterien sind zum Beispiel das Unterschreiten einer gewissen oberen Grenzleistung von Strahlung am Detektor.

Vorteilhaft ist weiterhin eine Ausführungsform des erfindungsgemäßen Systems, bei der die dem einfallenden Strahl zugewandte Fläche des Strahlfängers konkav gestaltet ist. Die Strahlung fällt dann näherungsweise senkrecht auf die Oberfläche des Strahlfängers, und eine hohe Absorption der Strahlung wird erreicht.

Eine andere bevorzugte Ausführungsform sieht vor, dass der Detektor ein Ein-Element-Detektor (nulldimensionaler Detektor) ist, der einen definierten Winkelbereich um die z-Achse abfahren kann. Ein-Element-Detektoren sind besonders preisgünstig und zuverlässig.

Bei einer alternativen Ausführungsform ist der Detektor ein eindimensionaler Detektor. Durch diesen kann eine Steigerung der Messgeschwindigkeit bei Vermessen eines Winkel- bzw. Raumwinkelbereiches erreicht werden.

Noch größere Messgeschwindigkeiten bei Vermessung eines Raumwinkelbereiches werden bei einer weiteren, besonders bevorzugten, alternativen Ausführungsform erreicht, die dadurch gekennzeichnet ist, dass der Detektor ein zweidimensionaler Flächendetektor ist, wobei die Detektorfläche im Wesentlichen senkrecht zur z-Richtung angeordnet ist. Flächendetektoren sind besonders empfindlich.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1:: den schematischen Strahlengang in einer Ausführungsform eines erfindungsgemäßen Systems mit in z-Richtung justiertem Strahlfänger;
- Fig. 2:: den schematischen Aufbau einer Ausführungsform des erfindungsgemäßen Systems;
- Fig. 3: den schematischen Aufbau eines in z-Richtung verschiebbaren Strahlfängers mit Federaufhängung nach der Erfindung;
- Fig. 4: den schematischen Aufbau eines in z-Richtung verschiebbaren Strahlfängers mit Spindelantrieb nach der Erfindung.

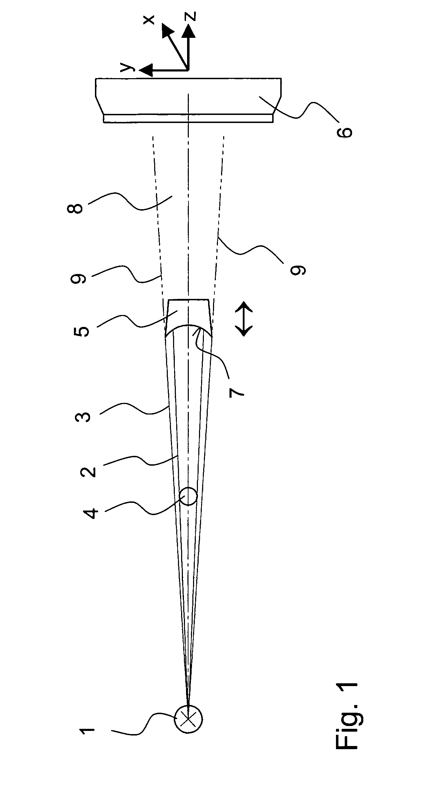

In **Fig. 1** ist der Strahlengang in einer Ausführungsform des erfindungsgemäßen röntgen- oder neutronenoptischen Systems dargestellt. Eine äußerst schematisch dargestellte Quelle 1 emittiert Strahlung (Röntgenoder Neutronenstrahlung) entlang einer z-Achse. Die emittierte Strahlung ist divergent (oder konvergent), d.h. ihr Querschnitt nimmt mit zunehmender Ausbreitung in positiver z-Richtung zu (oder ab). Die Strahlung besteht im wesentlichen aus einem kegelförmigen Primärstrahl 2, der in seinem äußeren Randbereich von einem kegelförmigen Mantel aus parasitärer Störstrahlung 3 umschlossen ist. Die Störstrahlung 3 kann beispielsweise durch Beugungseffekte an Blenden, welche zur Quelle 1 gehören, entstehen. Unter der Quelle 1 wird diejenige Vorrichtung verstanden, die den auf die Probe fallenden Primärstrahl 2 erzeugt, etwa ein letzter Spiegel, eine letzte Blende oder ein letzter Kollimator hinter einer Röntgenröhre oder einem (häufig radioaktiven) Neutronenstrahler.

Auf der Strahlachse (z-Achse) des Primärstrahls 2 ist eine Probe 4 angeordnet, die vom Primärstrahl vollständig ausgeleuchtet werden kann. Ein Großteil des Primärstrahls 2 durchdringt die Probe 4 unverändert, während ein anderer Teil der Strahlung in nicht dargestellter Weise mit der Probe 4 wechselwirkt und aus dem Kegelmantel von Primärstrahl 2 und Störstrahlung 3 herausgestreut oder - gebeugt wird.

Weiterhin auf der Strahlachse angeordnet sind ein Strahlfänger 5 und ein zweidimensionaler Flächendetektor 6. Der Strahlfänger 5 ist zwischen Probe 4 und Flächendetektor 6 angeordnet und kann entlang der z-Achse verschoben werden. Auch ist eine Justage der Position des Strahlfängers 5 in einer xy-Ebene senkrecht zur z-Richtung möglich. Die der Probe 4 zugewandte Außenkante 7 des Strahlfängers 5 erstreckt sich senkrecht zur z-Richtung genau so weit wie der Kegelmantel der Störstrahlung 3 an dieser z-Position. Dadurch wird ein Raumwinkelbereich 8, der durch Kanten 9 begrenzt ist, sowohl von Strahlung des Primärstrahls 2 als auch von Störstrahlung 3 freigehalten. Die sich an den Raumwinkelbereich 8 anschließende Fläche des Flächendetektors 6 bleibt von intensiver Strahlung frei, wodurch der Flächendetektor 6 vor Beschädigung geschützt wird. Die übrige Fläche des Flächendetektors 6 steht zur Detektion von an der Probe 4 gebeugter oder gestreuter Strahlung zur Verfügung.

Wäre der Strahlfänger weiter links, also bei einer kleineren z-Position näher an der Probe 4 angeordnet, würde über die Primärstrahlung 2 und die Störstrahlung 3 hinaus noch weitere, von der Probe 4 gebeugte oder gestreute Strahlung absorbiert. Wäre hingegen der Strahlfänger 5 weiter rechts, bei einer größeren z-Position weiter weg von der Probe 4 angeordnet, würde ein Teil der Störstrahlung 3 oder gar des Primärstrahls 2 auf den Flächendetektor 6 gelangen können.

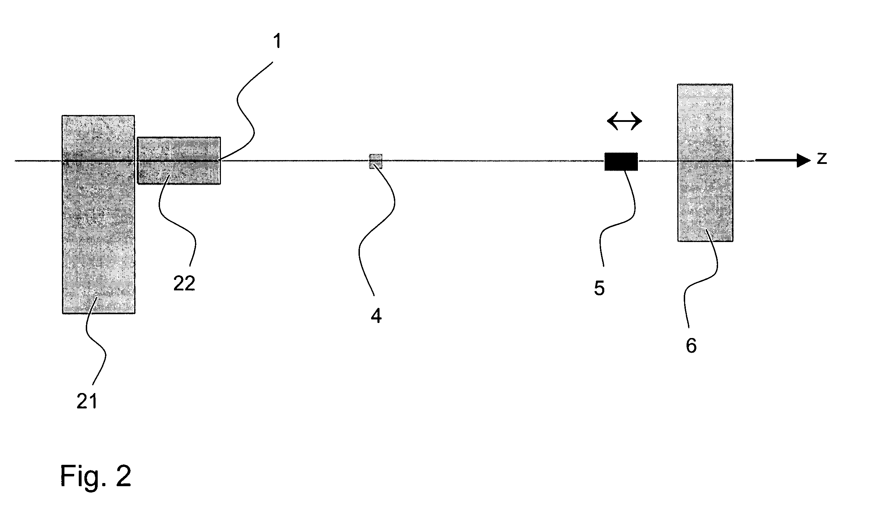

**Fig. 2** zeigt eine Ausführungsform eines erfindungsgemäßen röntgenoptischen Systems. An eine Röntgenröhre 21 ist eine optische Einrichtung 22 angeschlossen, die von der Röntgenröhre 21 bereitgestellte Röntgenstrahlung aufbereitet, insbesondere monochromatisiert und bündelt. Ein der Probe 4 zugewandtes Austrittsfenster der optischen Einrichtung 22 definiert die Quelle 1 der Röntgenstrahlung im Sinne der Erfindung. Die Quelle 1 emittiert den Primärstrahl sowie gegebenenfalls parasitäre Störstrahlung im wesentlichen entlang einer mit der z-Achse zusammenfallenden Strahlachse.

Zwischen der Probe 4 und einem Flächendetektor 6 ist ein Strahlfänger 5 angeordnet, der auf der Strahlachse (z-Achse) verschiebbar und arretierbar ist. Durch die Verschiebung des Strahlfängers 5 kann die auf den Flächendetektor 6 fallende Röntgenstrahlung definiert werden, um Störstrahlung von der Detektion auszuschließen und möglichst viel Nutzstrahlung einer Detektion zuzuführen.

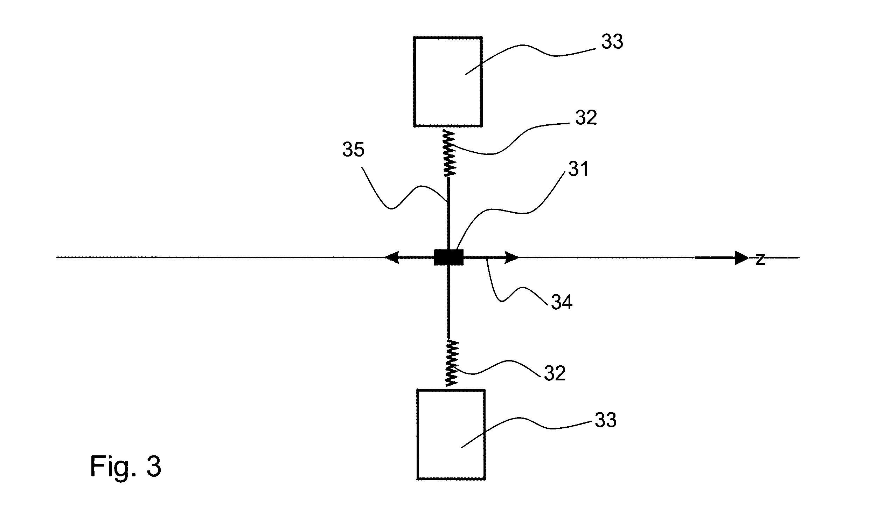

**Fig. 3** zeigt eine Ausführungsform eines Strahlfängers 31 im Rahmen der Erfindung. Der Strahlfänger 31 besteht hier aus einem zylinderförmigen permanentmagnetischen Plättchen mit einer Goldbeschichtung auf seiner der Quelle zugewandten Seite. Das Plättchen kann auch ein massives Absorberteil, beispielsweise aus Gold, Blei, Wismut etc., sowie ein permanentmagnetisches Element aufweisen, welches für die Bewegung des Strahlfängers 31 in einem Magnetfeld sorgt. Die Zylinderachse und Magnetachse fällt mit der z-Achse zusammen. Der Strahlfänger 31 ist mittels Kaptonfäden 35 an Spannfedern 32 befestigt, die ihrerseits an einem ortsfesten Halterahmen 33 befestigt sind.

Um den Strahlfänger 31 entlang der z-Achse zu justieren, kann im Bereich des Strahlfängers 31 in nicht dargestellter Weise mittels einer elektromagnetischen Spule eine Magnetfeld in z- oder -z-Richtung erzeugt werden. Dadurch wird eine Kraft auf den Strahlfänger 31 ausgeübt. Diese Kraft sorgt für eine Auslenkung des Strahlfängers 31 in Pfeilrichtung 34. Dieser Auslenkung wirken die Spannfedern 32 mit einer Rückstellkraft entgegen. Im Rahmen des Hook'schen Gesetzes ist die Auslenkung des Strahlfängers 34 aus der dargestellten Mittelposition linear mit dem in der elektromagnetischen Spule fließenden Gleichstrom, wodurch die z-Position des Strahlfängers 31 leicht einstellbar ist. Die elektromagnetische Spule kann vorteilhafter Weise im Halterahmen 33 integriert sein.

Anstelle einer magnetischen Vorrichtung zur Bewegung des Strahlfängers 31 können auch mechanische Konstruktionen eingesetzt werden.

Zur Justage des Strahlfängers 31, insbesondere zur Prüfung der Blockierung des Primärstrahls, kann statt eines empfindlichen Detektors entweder ein robuster Hilfsdetektor eingesetzt werden, der durch eine direkte Primärstrahleinwirkung nicht beschädigt wird, oder aber die Strahlungsleistung der Quelle wird für die Justagemessung so weit reduziert, dass eine Beschädigung des empfindiichen Detektors ausgeschlossen ist. Dies kann beispielsweise durch einen Absorber im Primärstrahl geschehen.

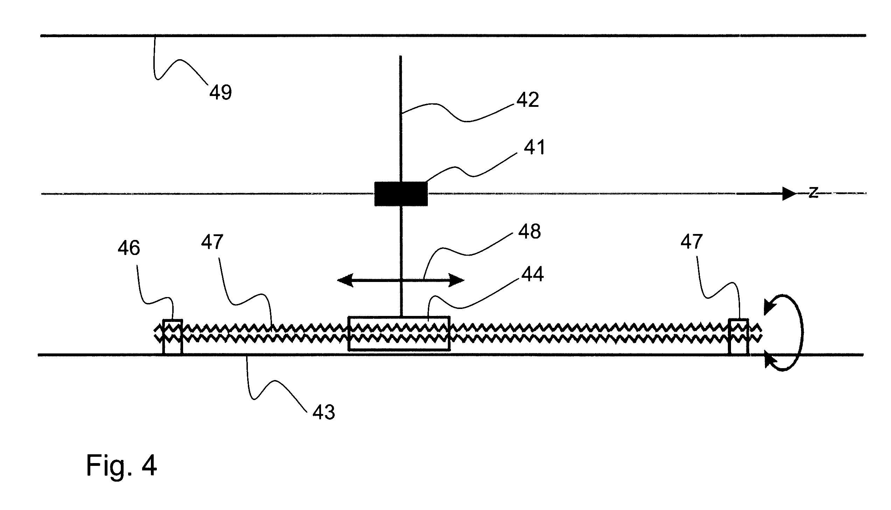

**Fig. 4** zeigt eine andere Ausführungsform eines Strahlfängers 41 im Rahmen der Erfindung. Der Strahlfänger 41 besteht aus einem zylinderförmigen Plättchen mit der Zylinderachse entlang der z-Achse. Der Strahlfänger 41 ist auf einem Stativ 42 angeordnet. Dieses Stativ 42 wird in einer parallel zur z-Achse verlaufenden Schiene 43 geführt. Ein Fuß 44 des Stativs 42 weist ein Gewinde auf, in dem eine Spindel 45 verläuft. Diese Spindel 45 ist über Backen 46, 47 an der Schiene 43 befestigt und über einen nicht dargestellten Motor antreibbar. Durch Drehung der Spindel wird der Fuß 44 entlang der Schiene 43 verschoben, wodurch das gesamte Stativ 42 in Pfeilrichtung 48 verschoben wird. Dies resultiert in einer Positionierung des Strahlfängers 41 auf der z-Achse. Die gesamte Anordnung mit dem Strahlfänger 41 ist innerhalb einer Strahlungsabschirmung 49 angeordnet.

Strahlfänger, welche in allen drei Raumrichtungen justierbar sind, können dazu eingesetzt werden, auch einzelne gebeugte Strahlen in einem Beugungsspektrum abzuschatten und auszublenden. Insofern können auch mehrere Strahlfänger im Rahmen dieser Erfindung miteinander kombiniert werden.

## Patentansprüche

1. Röntgen- bzw. Neutronen-optisches System mit einer Röntgen- bzw. Neutronen-Quelle (1), von der entsprechende Strahlung als Primärstrahl (2) auf eine zu untersuchende Probe (4) geführt wird, mit einem Röntgen- bzw. Neutronen-Detektor (6) zum Empfang von an der Probe (4) gebeugter oder gestreuter Strahlung, wobei die Quelle (1), die Probe (4) und der Detektor (6) im Wesentlichen auf einer Linie (=z-Achse) angeordnet sind, und wobei zwischen der Probe (4) und dem Detektor ein Strahlfänger (5; 31; 41) vorgesehen ist, dessen Querschnittsform senkrecht zur z-Richtung an den Querschnitt des Primärstrahls (2) angepasst ist,
**dadurch gekennzeichnet,**
**dass** der Strahlfänger (5; 31; 41) zur optimalen Einstellung des Verhältnisses der auf den Detektor gelangenden Nutzstrahlung zur Störstrahlung entlang der z-Richtung verschiebbar angeordnet ist.

2. System nach Anspruch 1, **dadurch gekennzeichnet, dass** das System zur Messung von Kleinwinkel-Streuung, insbesondere zwischen 0,1° und 5° eingerichtet ist.

3. System nach einem der vorhergehenden Ansprüche, **dadurch gekennzeichnet, dass** der Strahlfänger (5; 31; 41) in einer xy-Ebene senkrecht zur z-Richtung justierbar ist.

4. System nach einem der vorhergehenden Ansprüche, **dadurch gekennzeichnet, dass** der Strahlfänger (5; 31; 41) eine runde, vorzugsweise eine kreisförmige Querschnittsform aufweist.

5. System nach einem der vorhergehenden Ansprüche, **dadurch gekennzeichnet, dass** der Strahlfänger (5; 31; 41) eine Kegelstumpf-ähnliche Form aufweist.

6. System nach einem der vorhergehenden Ansprüche, **dadurch gekennzeichnet, dass** der Strahlfänger (5; 31; 41) aus einem für die Strahlung stark absorbierenden Material aufgebaut ist, insbesondere aus Au und/oder Sb und/oder Pb und/oder W und/oder Bi.

7. System nach einem der vorhergehenden Ansprüche, **dadurch gekennzeichnet, dass** der Strahlfänger (5; 31; 41) motorisch in z-Richtung verfahrbar ist.

8. System nach Anspruch 7, **dadurch gekennzeichnet, dass** das System nach vorgebbaren Kriterien automatisch justierbar ist.

9. System nach einem der vorhergehenden Ansprüche, **dadurch gekennzeichnet, dass** die dem einfallenden Strahl zugewandte Fläche (7) des Strahlfängers (5; 31; 41) konkav gestaltet ist.

10. System nach einem der vorhergehenden Ansprüche, **dadurch gekennzeichnet, dass** der Detektor ein Ein-Element-Detektor (nulldimensionaler Detektor) ist, der einen definierten Winkelbereich um die z-Achse abfahren kann.

11. System nach einem der Ansprüche 1 bis 9, **dadurch gekennzeichnet, dass** der Detektor ein eindimensionaler Detektor ist.

12. System nach einem der Ansprüche 1 bis 9, **dadurch gekennzeichnet, dass** der Detektor ein zweidimensionaler Flächendetektor (6) ist, wobei die Detektorfläche im Wesentlichen senkrecht zur z-Richtung angeordnet ist.
